# EUROPÄISCHE PATENTSCHRIFT

(11) **EP 3 420 392 B1**
(45) Veröffentlichungstag und Bekanntmachung des Hinweises auf die Patenterteilung: **17.08.2022**
(21) Anmeldenummer: 17709001.6
(22) Anmeldetag: 21.02.2017
(51) Int. Cl.: G02B 21/00, G02B 21/16, G02B 21/06

(54) **LICHTBLATTMIKROSKOP UND VERFAHREN ZUR LICHTMIKROSKOPISCHEN ABBILDUNG EINER PROBE**
LIGHT SHEET MICROSCOPE AND METHOD FOR IMAGING A SAMPLE BY LIGHT SHEET MICROSCOPY
MICROSCOPE EN FLUORESCENCE À FEUILLE DE LUMIÈRE ET PROCÉDÉ D'IMAGERIE D'ÉCHANTILLON AU MOYEN D'UN DU MICROSCOPE EN FLUORESCENCE À FEUILLE DE LUMIÈRE

(30) Priorität: 23.02.2016 DE 102016103182
(43) Veröffentlichungstag der Anmeldung: 02.01.2019
(73) Patentinhaber: Leica Microsystems CMS GmbH, 35578 Wetzlar (DE)
(72) Erfinder: SCHUMANN, Christian, 35392 Gießen (DE)
(74) Vertreter: Schaumburg und Partner Patentanwälte mbB
(86) Internationale Anmeldenummer: PCT/EP2017/053890
(87) Internationale Veröffentlichungsnummer: WO 2017/144442

(56) Entgegenhaltungen:
- WO-A2-2015/109323
- US-A1- 2015 323 774
- US-B2- 8 582 203
- US-B2- 8 730 583
- Sunil Kumar ET AL: "High-speed 2D and 3D fluorescence microscopy of cardiac myocytes References and links", Am. J. Physiol. Circ. Res. Proc. Natl. Acad. Sci. U.S.A. Circ. Res. Circ. Res. Proc. Natl. Acad. Sci. U.S.A. J. Biomed. Opt. Biophys. J. Ann. Phys. Science Development ScienceFast" Opt. Express E. J. Botcherby, Opt. Lett. Opt. Commun. Opt. Lett, 1. Januar 1999 (1999-01-01), Seiten 575-585, XP055327152, Gefunden im Internet: URL:https://www.osapublishing.org/DirectPD FAccess/86A91417-0B3F-6265-DA72B7D3805A9C5 E_219582/oe-19-15-13839.pdf?da=1&id=219582 &seq=0&mobile=no
- BOTCHERBY E J ET AL: "ABERRATION-FREE OPTICAL REFOCUSING IN HIGH NUMERICAL APERTURE MICROSCOPY", OPTICS LETTERS, OPTICAL SOCIETY OF AMERICA, Bd. 32, Nr. 14, 15. Juli 2007 (2007-07-15) , Seiten 2007-2009, XP001506742, ISSN: 0146-9592, DOI: 10.1364/OL.32.002007

## Beschreibung

Die Erfindung betrifft ein Lichtblattmikroskop, umfassend eine Beleuchtungsoptik zum Erzeugen eines Lichtblatts in einem Zwischenbildraum, eine beidseitig telezentrisch ausgebildete Transportoptik zum Abbilden des in der Zwischenbildebene erzeugten Lichtblatts in eine Probe und zum Abbilden eines mit dem Lichtblatt beleuchteten Bereichs der Probe als Zwischenbild in den Zwischenbildraum, und eine Detektionsoptik zum Abbilden des in dem Zwischenbildraum erzeugten Zwischenbildes auf einen Detektor, wobei die optischen Achsen der Beleuchtungsoptik, der Transportoptik und der Detektionsoptik einander in dem Zwischenbildraum schneiden.

Konventionelle Lichtblattmikroskope weisen probenseitig zwei separate Objektive auf, von denen eines der Beleuchtung und das andere der Detektion dient. Über das Beleuchtungsobjektiv wird üblicherweise parallel zur optischen Achse ausgerichtetes Lichtblatt in die Probe fokussiert, das dann von dem Detektionsobjektiv, dessen optische Achse rechtwinklig zur optischen Achse des Beleuchtungsobjektivs liegt, auf einen Detektor abgebildet wird. Für Anwendungen, in denen eine Abbildung der Probe mittels eines solchen mit zwei separaten Objektiven ausgestatteten Lichtblattmikroskops mangels Raum nicht möglich ist, wurde in der US 8 582 203 B2 ein Mikroskop vorgeschlagen, das probenseitig mit einem einzigen Objektiv auskommt. Bei diesem Mikroskop wird das Lichtblatt derart in die Probe fokussiert, dass es zur optischen Achse des Objektivs schräg gestellt ist. Wegen dieser Schrägstellung wird ein solches Mikroskop auch als Schiefebenenmikroskop (OPM: "oblique plane microscope") bezeichnet.

Da das aus dem Stand der Technik bekannte Schiefebenenmikroskop nur ein einziges probenzugewandtes Objektiv aufweist, ermöglicht es einen Zugang zur fluoreszenzbasierten mikroskopischen Lichtblattbildgebung in Proben, deren Abbildung mittels eines konventionellen Lichtblattmikroskops mit zwei Objektiven nicht möglich ist. Als eine wesentliche Komponente enthält es eine sogenannte Transportoptik, die der Volumenbildgebung dient. Diese Transportoptik ist ein 4f-System oder beidseitig telezentrisches Abbildungssystem, dessen Vergrößerung dem Brechungsindexverhältnis zwischen Proben- und Zwischenbildraum entsprechen muss, um auch eine korrekte Abbildung der Aperturwinkel zu gewährleisten. Sind die Erfordernisse einer beidseitigen Telezentrie sowie der genannten Vergrößerungsanpassung erfüllt, so wird gleichsam ein Transport eines Volumenbildes zwischen Probenraum und Zwischenbildraum möglich. Demgegenüber erfolgt in einem konventionellen Mikroskop, in dem eines der beiden vorstehend genannten Erfordernisse nicht erfüllt ist, lediglich der Transport eines Ebenenbildes.

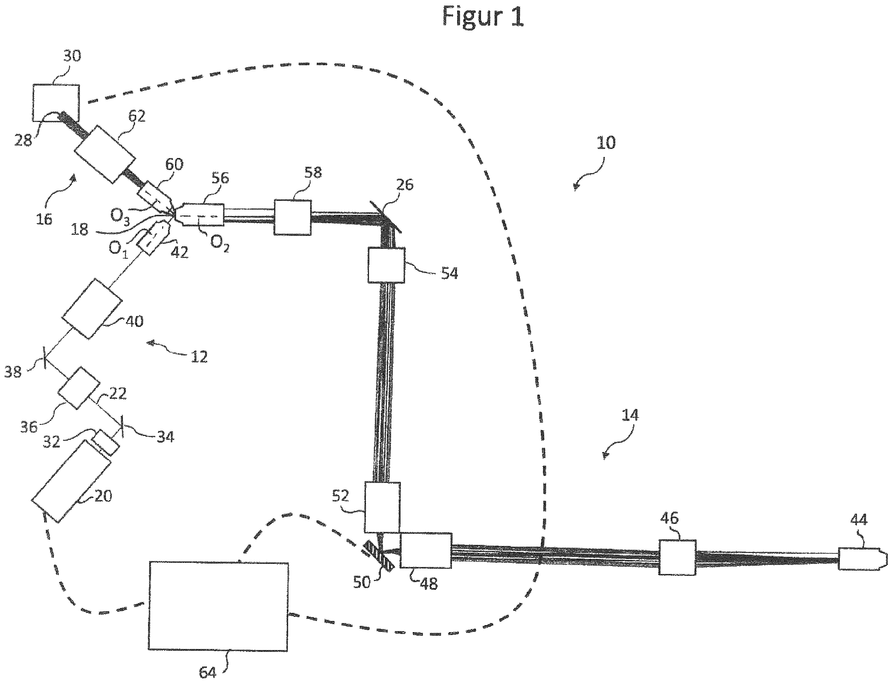

Aus Kumar et al., Optics Express 19 (2011), 13839 - 13847 (darin Figur 1) ist ein Lichtblattmikroskop bekannt, das eine Beleuchtungsoptik, eine Transportoptik vorstehend erläuterter Art sowie eine Detektionsoptik aufweist, deren optische Achsen in dem Zwischenbildraum zusammenlaufen. Zur Fokussierung und zur Volumenbildaufnahme kann eines der in der Transportoptik enthaltenen Objektive axial verschoben werden. Alternativ kann auch die Probe längs der optischen Achse der Transportoptik bewegt werden. Nachteilig an dieser bekannten Anordnung ist somit die Bewegung vergleichsweise großer Massen in Form des Objektivs bzw. der Probe, durch die Vibrationen entstehen können und die nur eine geringe Volumenbildrate ermöglichen.

Aus der US 8 619 237 B2 ist eine Variation eines Schiefebenenmikroskops bekannt, die eine laterale Abtastung des Volumens mit Hilfe zweier Umlenkelemente ermöglicht, von denen eines dem Beleuchtungslichtblatt und das andere der Abbildungs- ebene zugeordnet ist. Die beiden Umlenkelemente sind an einem Polygonspiegel ausgebildet und damit geometrisch miteinander gekoppelt. Die Anordnung der Umlenkelemente ist deshalb nicht telezentrisch. Auch ermöglicht sie nur die Nutzung der halben Systempupille für die Abbildung. Dies verursacht geometrische Verzerrungen und beschränkt die Lichteffizienz des Systems. Des Weiteren ist ein Polygonspiegel nur aufwändig und teuer zu fertigen und besitzt ein vergleichsweise großes Trägheitsmoment, das die Volumenbildrate des Systems begrenzt.

In Bouchard et al., Nature Photonics 9 (2015), 113 - 119 (darin im Ergänzungsteil enthaltene Figur 5) ist eine Abwandlung des vorstehend genannten Systems offenbart, bei der die volle Pupille genutzt werden kann. Jedoch sind hierfür zwei Galvanometersysteme erforderlich, die synchronisiert werden müssen. Außerdem benötigt dieses abgewandelte System eine Vielzahl an optischen Baugruppen.

Aus der WO 2015/109 323 A2 (darin Figur 10) ist ein Schiefebenenmikroskop mit lateraler Abtastung bekannt, das mit einem einzigen Abtastelement auskommt. Jedoch erfolgt bei diesem Mikroskop die Kombination bzw. Trennung von Beleuchtungslicht und Detektionslicht mittels eines in der Transportoptik enthaltenen dichroitischen Strahlteilers. Ein solcher Strahlteiler hat den Nachteil, dass er in der Transportoptik einen Pupillenversatz verursacht, der möglicherweise so groß ist, dass die Transportoptik die erforderliche Volumenabbildung nicht mehr gewährleistet. Um den Pupillenversatz zu minimieren und auch die erforderliche Transmission durch das Strahlteilersubstrat zuzulassen, sollte der dichroitische Strahlteiler möglichst dünn ausgeführt sein. Da ein solcher Strahlteiler häufig ein vergleichsweise kompliziert aufgebautes Schichtsystem darstellt, besteht bei einer besonders dünnen Ausführung die Gefahr, dass Verspannungen entstehen, die man als astigmatische Bildfehler der Abbildung in Reflektion sieht.

Ein Lichtblattmikroskop nach dem Oberbegriff des Anspruchs 1 ist bekannt aus Sunil Kumar et al.: High-speed 2D and 3D fluorescence microscopy of cardiac myocytes References and links", Am. J. Physiol. Circ. Res. Proc. Natl, Acad. Sci. U.S.A. Circ. Res. Circ. Res. Proc. Natl. Acad. Sci. U.S.A. J. Biomed. Opt. Biophys. J. Ann. Phys. Science Development ScienceFast" Opt. Express E.J. Botcherby, Opt. Lett. Opt. Commun. Opt. Lett, 1. Januar 1999 (1999-01-01), Seiten 575-585, XP055327152. Bei diesem Mikroskop wird das Lichtblatt mittels eines Objektivs, das über ein Piezoelement verstellt wird, längs der optischen Achse bewegt.

Aufgabe der Erfindung ist es, ein Lichtblattmikroskop sowie ein Verfahren zur lichtmikroskopischen Abbildung einer Probe anzugeben, die eine effiziente Volumenbildgebung mit vergleichsweise geringem technischen Aufwand ermöglichen.

Die Erfindung löst diese Aufgabe durch die Gegenstände der unabhängigen Ansprüche. Vorteilhafte Weiterbildungen sind in den abhängigen Ansprüchen sowie der folgenden Beschreibung angegeben.

Das erfindungsgemäße Lichtblattmikroskop umfasst eine Beleuchtungsoptik zum Erzeugen eines Lichtblatts in einem Zwischenbildraum, eine beidseitig telezentrisch ausgebildete Transportoptik zum Abbilden des in dem Zwischenbildraum erzeugten Lichtblatts in eine Probe und zum Abbilden eines mit dem Lichtblatt beleuchteten Bereichs der Probe als Zwischenbild in den Zwischenbildraum, und eine Detektionsoptik zum Abbilden des in dem Zwischenbildraum erzeugten Zwischenbildes auf einen Detektor. Die optischen Achsen der Beleuchtungsoptik, der Transportoptik und der Detektionsoptik schneiden einander in dem Zwischenbildraum. In der Transportoptik ist ein Abtastelement angeordnet, durch welches das Lichtblatt in der Probe quer zur optischen Achse der Transportoptik bewegbar ist.

Die erfindungsgemäße Transportoptik stellt ein Zwischenabbildungssystem dar, das die für die Volumenbildgebung erforderlichen Eigenschaften aufweist, nämlich eine Vergrößerung, die dem Brechungsindexverhältnis zwischen Probenraum und Zwischenbildraum entspricht, um eine korrekte Abbildung der Aperturwinkel zu gewährleisten, und eine beidseitige, d.h. sowohl objektseitige und auch bildseitige Telezentrie, d.h. eine Lateralvergrößerung, die von der Position längs der optischen Achse unabhängig ist.

Die Verwendung einer beidseitig telezentrischen Transportoptik und einer dadurch ermöglichten telezentrischen Abtastanordnung hat gegenüber konventionellen Lichtblattmikroskopen, deren Zwischenabbildungsoptiken nicht beidseitig telezentrisch sind, u.a. den Vorteil, dass in der Transportoptik keine Verzerrungen verursacht werden.

Die Erfindung sieht vor, in der Transportoptik vorzugsweise ein einziges Abtastelement vorzusehen, das imstande ist, das Lichtblatt in der Probe quer zur optischen Achse der Transportoptik zu bewegen. Die Erfindung ermöglicht somit eine laterale Abtastung, welche die Volumenbildgebung erleichtert. Insbesondere gegenüber herkömmlichen Lichtblattmikroskopen, bei denen zur Volumenbildaufnahme ein Objektiv oder die Probe und damit eine vergleichsweise große Masse längs der optischen Achse bewegt wird, hat das erfindungsgemäße Mikroskop den Vorteil einer vibrationsfreien Bildaufnahme. Außerdem kann eine höhere Volumenbildrate erzielt werden.

Indem in der erfindungsgemäßen Transportoptik zum Zwecke der lateralen Abtastung nur ein einziges Abtastelement beispielsweise in Form eines Galvanometerspiegels oder eines mikro-elektromechanischen Spiegels, kurz MEMS-Spiegels, benötigt wird, ist im Unterschied zu bekannten Mikroskopen, die mit zwei Abtastelementen arbeiten, keine aufwändige Synchronisation erforderlich und ein telezentrischer Abtastvorgang ohne Zusatzaufwand möglich. Das Lichtblattmikroskop nach der Erfindung kommt also mit einer geringeren Zahl an optischen Komponenten aus als vergleichbare Mikroskope aus dem Stand der Technik. Dies macht die technische Realisierung des Mikroskops einfacher und kostengünstiger. Dies gilt insbesondere auch im Vergleich zu herkömmlichen Systemen, in denen vergleichsweise teure Polygonspiegel zum Einsatz kommen.

Bei dem erfindungsgemäßen Lichtblattmikroskop sind die Beleuchtungsoptik, die Transportoptik und die Detektionsoptik so aufeinander abgestimmt, dass ihre optischen Achsen in dem Zwischenbildraum zusammenlaufen, d.h. einander schneiden. Damit erfolgt die Einkopplung des Beleuchtungslichts im Bereich des im Zwischenbildraum erzeugten Zwischenbildes. Dies ermöglicht es, auf dichroitische Elemente im Bereich der Transportoptik zu verzichten, die in bekannten Lichtblattmikroskopen zur Kombination bzw. Trennung von Beleuchtungslicht und Detektionslicht zum Einsatz kommen. Da einerseits solche dichroitischen Elemente häufig einen erheblichen Pupillenversatz erzeugen und andererseits die Transportoptik gegenüber einem solchen Pupillenversatz relativ empfindlich ist, begünstigt der erfindungsgemäße Verzicht auf dichroitische Elemente den präzisen Transport des Volumenbildes zwischen Probenraum und Zwischenbildraum. So kann beispielsweise auf hochgenaue Wechselkonzepte für dichroitische Strahlteiler, welche die Anpassung des Strahlteilers auf das jeweilige Experiment ermöglichen und in der benötigten Präzision nur aufwändig und teuer zu realisieren sind, verzichtet werden. Des Weiteren ist die Nutzung dichroitischer Strahlteiler auch für Mehrwellenlängenabbildungen kompromissbehaftet. So kommt es hier beispielsweise häufig zu einem Übersprechen der spektralen Kanäle. Demgegenüber ist der Einsatz von Neutralteilern und Polarisationsteilern für Fluoreszenzabbildungen nicht geeignet.

Durch die erfindungsgemäße geometrische Kombination von Beleuchtungslicht und Emissionslicht im Bereich des Zwischenbildes an der Schnittstelle der optischen Achsen von Beleuchtungsoptik, Transportoptik und Detektionsoptik und den durch diese Kombination möglichen Verzicht auf dichroitische Elemente im Transportstrahlengang können die vorstehend erläuterten Nachteile vermieden werden. So sieht die Erfindung vor, mittels der Beleuchtungsoptik das Lichtblatt in dem Zwischenbildraum zu erzeugen. Die Detektionsoptik hat die Funktion, das im Zwischenbildraum erzeugte Zwischenbild auf den Detektor abzubilden. Somit bilden die Beleuchtungsoptik und die Detektionsoptik für sich genommen schon eine Mikroskopeinheit, deren Strahlengänge durch die Transportoptik gleichsam nur noch in die Probe transportiert werden müssen. Diese Mikroskopeinheit kann mit anderen Worten schon als eigenständiges Lichtblattmikroskop aufgefasst werden, das lediglich an die Transportoptik anzukoppeln ist. Damit ist die erfindungsgemäße Anordnung weniger toleranz- und justagesensitiv als Systeme, die mit Strahlteilern oder dergleichen arbeiten, um die Teilsysteme erst zu einem voll funktionsfähigen Mikroskop zusammenzusetzen. Dies gilt umso mehr, als es in den vorstehend genannten Teilsystemen häufig zu Unterschieden in den Aberrationen kommt, die durch geeignete Vorkehrungen ausgeglichen oder eben toleriert werden müssen.

Die Transportoptik ist ausgebildet, das Lichtblatt in der Probe schräg zur optischen Achse der Transportoptik zu stellen. Das erfindungsgemäße Lichtblattmikroskop bildet somit ein hocheffizientes Schiefebenenmikroskop.

Aus den oben dargelegten Gründen ist die ist die Transportoptik in einer bevorzugten Ausführung strahlteilerfrei. Insbesondere weist sie keinen dichroitischen Strahlteiler zur Einkopplung des Beleuchtungslichts auf.

Das Abtastelement ist innerhalb der Transportoptik am Ort eines reellen

Pupillenbilds, d.h. in der Fourierebene angeordnet. Als beidseitig telezentrisches System weist die Transportoptik nur eine einzige Pupille auf.

Die Transportoptik enthält vorzugsweise ein erstes Objektiv, welches das einzige probenzugewandte Objektiv des Lichtblattmikroskops bildet.

In einer vorteilhaften Ausführung enthält die Transportoptik ferner ein erstes Tubuslinsensystem, ein erstes Okularlinsensystem, ein zweites Okularlinsensystem, ein zweites Tubuslinsensystem und ein dem Zwischenbildraum zugewandtes zweites Objektiv, die in der genannten Reihenfolge von der Probe her angeordnet sind. Diese Ausgestaltung ermöglicht einen besonders kompakten Aufbau des Transportsystems.

Das Abtastelement ist vorzugsweise zwischen dem ersten Okularsystem und dem zweiten Okularsystem angeordnet.

In einer besonders bevorzugten Ausgestaltung enthält die Transportoptik eine Bildrotationseinheit, durch welche der Azimut der Verkippung des Lichtblatts in der Probe relativ zur optischen Achse der Transportoptik änderbar ist. Eine solche Bildrotationseinheit ermöglicht eine einfache und flexible Justage des Lichtblattes in der Probe. Sie kann beispielsweise durch einen Abbe-König-Rotator realisiert sein, der vorzugsweise in einem Strahlengang der Transportoptik angeordnet ist.

Des Weiteren kann die Transportoptik als korrektionsoptisches System ausgestaltet sein, das die Anpassung an Proben unterschiedlicher Brechungsindizes zulässt. Dies kann beispielsweise durch die Nutzung von Objektiven mit Korrektionsverstellung (wie z.B. aus US8730583 B2 bekannt) geschehen, welche auch eine motorisierte Verstellung des Korrektionselements zulassen. Besonders vorteilhaft ist die Nutzung von Objektiven mit Korrektionsverstellung, welche nicht nur den durch Brechungsindexfehlanpassung bedingten Öffnungsfehler korrigieren, sondern gleichzeitig so ausgestaltet sind, dass sich die Brennweite bei Nutzung der Korrektionsverstellung dergestalt ändert, dass die für die Transportoptik geltende Vergrößerungsbedingung für alle probenseitigen Brechungsindizes erfüllt bleibt.

Um dem weiter oben erläuterten Erfordernis einer Vergrößerungsanpassung zu genügen, kann es erforderlich sein, in die Transportoptik ein entsprechendes Vergrößerungselement einzubauen, z.B. ein afokales System, das in einem Teil des Unendlichstrahlengangs der Transportoptik angeordnet ist.

Die Beleuchtungsoptik enthält vorzugsweise ein Fernrohrsystem und ein dem Zwischenbild zugewandtes Beleuchtungsobjektiv.

Als Lichtquelle wird vorzugsweise eine Laserlichtquelle genutzt. Die Lichtquelle kann jedoch auch eine Leuchtdiode oder eine Lampe sein. Bei Verwendung einer Laserlichtquelle ist im Strahlengang der Beleuchtungsoptik kein Anregungsfilter erforderlich. Wird dagegen eine Lichtquelle mit breitem Emissionsspektrum verwendet, kann ein solches Filter erforderlich sein.

Die Beleuchtungsoptik enthält vorzugsweise ein anamorphotisches optisches System zum Erzeugen des Lichtblattes. Das anamorphotische System kann durch eine Zylinderlinse allein oder in Kombination mit einem ihr nachgeordneten Beleuchtungsobjektiv realisiert sein.

In einer alternativen Ausführungsform enthält die Beleuchtungsoptik ein weiteres Abtastelement beispielsweise in Form eine Galvanometerspiels oder eines MEMS-Spiegels zum Erzeugen des Lichtblatts in dem Zwischenbildraum. In dieser Ausführungsform wird durch die Abtastbewegung des auf das Abtastelement fallenden Beleuchtungslichtstrahls das Lichtblatt sequentiell aufgebaut. Diese Art der Lichtblatterzeugung bietet beispielsweise die Möglichkeit, durch eine entsprechende Synchronisation zwischen Lichtquelle und Abtastelement eine Strukturierung des Lichtblattes zu erzielen.

Vorzugsweise enthält die Beleuchtungsoptik eine Verstellvorrichtung zur Ausrichtung des Lichtblatts relativ zu einer Detektionsebene des Detektors. Das Lichtblatt lässt sich so besonders einfach justieren.

Die vorstehend genannte Verstellvorrichtung umfasst vorzugsweise ein erstes Verstellelement, das in einer zu einer Bildebene konjugierten Ebene angeordnet ist, und ein zweites Verstellelement, das in einer zu einer Pupillenebene konjugierten Ebene angeordnet ist. Damit lassen sich Position und Winkel des Lichtblattes unabhängig voneinander einstellen.

In einer bevorzugten Ausführung ist mindestens ein Umlenkelement zur Faltung eines Strahlengangs vorgesehen. Ein solches Umlenkelement kann beispielsweise in der Transportoptik angeordnet werden, um diese möglichst kompakt auszuführen.

Die Detektionsoptik weist vorzugsweise ein dem Zwischenbildraum zugewandtes Detektionsobjektiv und ein Tubuslinsensystem auf, die das detektierte Fluoreszenzlicht auf den Detektor, z.B. einen Kamerasensor, abbilden. In dem Unendlichstrahlengang zwischen dem Detektionsobjektiv und dem Tubuslinsensystem kann ein Emissionsfilter angeordnet sein, das entweder ortsfest oder auf einer Wechselvorrichtung montiert ist. Diese Ausführung ist jedoch nur beispielhaft zu verstehen. So kann die Detektionsoptik auch als endlich abbildendes System ohne Tubuslinsensystem ausgeführt sein.

Zur Synchronisation des in der Transportoptik enthaltenen Abtastelementes und der Bildaufnahme mittels des Detektors kann eine Kontrolleinheit vorgesehen sein. Diese ist vorzugsweise so ausgebildet, dass sie auch die Lichtquelle steuert und diese mit der Bildaufnahme und dem Abtastelement synchronisiert. In einer Ausführungsform, in der das Lichtblatt mittels eines weiteren, in der Beleuchtungsoptik enthaltenen Abtastelementes erzeugt wird, ist die Kontrolleinheit vorzugsweise weiterhin so ausgebildet, dass sie auch dieses Abtastelement mit den übrigen Systemkomponenten synchronisiert.

Vorzugsweise ist das erfindungsgemäße Lichtblattmikroskop so ausgeführt, dass der Hauptstrahl der Detektionsoptik durch die Transportoptik transmittiert wird. Dadurch lässt sich eine hohe Lichteffizienz erzielen.

Bei der Wahl der numerischen Apertur der Detektionsoptik kann eine symmetrische Ausleuchtung der Pupille des Detektionsobjektivs und damit eine symmetrische Punktspreizfunktion (kurz PSF) auf den Kamerasensor gewählt werden. Alternativ kann die Apertur der Detektionsoptik auch maximiert werden, was zu einer unsymmetrischen PSF auf dem Detektor führt, jedoch eine höhere Lichteffizienz der Optik zur Folge hat.

In einer weiteren Ausführungsform enthält die Detektionsoptik ein Zoomsystem, so dass sie über eine vom Detektionsobjektiv unabhängige Möglichkeit der Vergrößerungsänderung verfügt. Beispielsweise kann das oben genannte Tubuslinsensystem als Zoomsystem ausgeführt sein. Es ist jedoch ebenso möglich, ein Wechselsystem für afokale Vergrößerungssysteme im Unendlichstrahlengang der Detektionsoptik anzuordnen. Auch ein Wechselsystem für das Tubuslinsensystem ist zu dem genannten Zweck denkbar.

In dem Unendlichstrahlengang der Detektionsoptik können Manipulationssysteme eingekoppelt werden, wie sie aus konventionellen Mikroskopen bekannt sind, dort üblicherweise in einem Auflichtbeleuchtungsstrahlengang. Diese Manipulationssysteme ermöglichen eine Manipulation direkt in der abgebildeten Ebene, während das manipulierte Licht mittels der Transportoptik in die Probe abgebildet wird. Beispiele für solche Manipulationssysteme sind etwa Abtastsysteme wie digitale Mikrospiegelschaltungen, kurz DMD.

Das erfindungsgemäße Lichtblattmikroskop kann wahlweise als selbständiges System oder als Modul für ein konventionelles Mikroskop, z.B. ein aufrechtes Mikroskop, ein inverses Mikroskop oder ein Fixed-Stage-Mikroskop realisiert sein. Ist das Lichtblattmikroskop als Modul für ein konventionelles Mikroskop realisiert, können ein oder mehrere Teile der Transportoptik, z.B. das probenzugewandte Objektiv, ein Tubuslinsensystem und/oder ein Okularlinsensystem Teil des Mikroskops sein.

Die Erfindung wird im Folgenden anhand von Ausführungsbeispielen unter Bezugnahme auf die Figuren erläutert. Darin zeigen:
- Fig. 1: den schematischen Aufbau eines Lichtblattmikroskops als erstes Ausführungsbeispiel;
- Fig. 2: eine abgewandelte Ausführungsform des Lichtblattmikroskops als zweites Ausführungsbeispiel; und
- Fig. 3: eine weitere abgewandelte Ausführungsform des Lichtblattmikroskops als drittes Ausführungsbeispiel.

Figur 1 zeigt in schematischer Darstellung den Aufbau eines Lichtblattmikroskops 10, das nach Art eines Schiefebenenmikroskops der Volumenbildgebung dient.

Das Lichtblattmikroskop 10 umfasst eine Beleuchtungsoptik 12, eine Transportoptik 14 und eine Detektionsoptik 16, deren optische Achsen O₁, O₂ bzw. O₃ in einem in Figur 1 mit 18 bezeichneten Zwischenbildraum zusammenlaufen, d.h. dort einander schneiden. Die Beleuchtungsoptik 12 dient dazu, das ihr von einer Lichtquelle 20 zugeführte Beleuchtungslicht 22 derart in den Zwischenbildraum 18 zu fokussieren, dass dort eine Beleuchtungslichtverteilung nach Art eines Lichtblattes erzeugt wird. Dieses im Zwischenbildraum 18 erzeugte Lichtblatt wird dann durch die Transportoptik 14 in eine in Figur 1 nicht gezeigte Probe abgebildet, so dass ein Bereich der Probe mit dem Lichtblatt beleuchtet und zur Emission von Fluoreszenzstrahlung angeregt wird. Die von der Probe abgegebene Fluoreszenzstrahlung gelangt wiederum in die Transportoptik 14, die so den mit dem Lichtblatt beleuchteten Probenbereich als Zwischenbild in den Zwischenbildraum 18 abbildet. Das in dem Zwischenbildraum 18 erzeugte Zwischenbild des beleuchteten Probenbereichs wird schließlich durch die Detektionsoptik 16 auf eine Detektionsfläche 28 eines Detektors 30 abgebildet.

Die Beleuchtungsoptik 12 enthält in Ausbreitungsrichtung des von der Lichtquelle 20 ausgesendeten Beleuchtungslichtes 22 nacheinander eine Zylinderlinse 32, ein erstes Verstellelement 34, ein Okularlinsensystem 36, ein zweites Verstellelement 38, ein Tubuslinsenelement 40 sowie ein Beleuchtungsobjektiv 42, das dem Zwischenbildraum 18 zugewandt ist. Die Zylinderlinse 32 und das Beleuchtungsobjektiv 42 sind in dem Ausführungsbeispiel nach Figur 1 Teil eines anamorphotischen optischen Systems, das die Funktion hat, aus dem von der Lichtquelle 20 emittierten Beleuchtungslicht 22 in dem Zwischenbildraum 18 das Lichtblatt in der gewünschten Form zu erzeugen. Dabei fokussiert die Zylinderlinse 32 das Beleuchtungslicht 22 in das von dem Okularlinsensystem 36 und dem Tubuslinsensystem 40 erzeugte Bild der Pupille des Beleuchtungsobjektivs 42. In dem Ausführungsbeispiel nach Figur 1 bilden das Tubuslinsensystem 40 und das Okularlinsensystem 36 somit ein Galilei-Fernrohr mit reellem Zwischenbild. Es ist jedoch darauf hinzuweisen, dass die in der Ausführungsform nach Figur 1 gewählte Realisierung des anamorphotischen Systems rein beispielhaft zu verstehen ist. So ist es beispielsweise insbesondere bei kleineren numerischen Aperturen auch möglich, unter Verzicht auf das Beleuchtungsobjektiv 42 allein die Zylinderlinse 32 zur Formung des Lichtblattes zu nutzen.

Die beiden in der Beleuchtungsoptik 12 enthaltenen Verstellelemente 34 und 38 bilden eine Verstellvorrichtung, die es ermöglicht, das Lichtblatt relativ zur Detektionsfläche 28 des Detektors 30 zu justieren, genauer gesagt, relativ zu dem durch die Detektionsoptik 16 in dem Zwischenbildraum 18 erzeugten Bild der Detektionsfläche 28, dem das Lichtblatt überlagert ist. Dabei ist das Verstellelement 38 in einer Ebene angeordnet, die zu einer Bildebene des Beleuchtungsobjektivs 42 konjugiert ist. Demnach wird durch Verkippen des Verstellelementes 38 der Winkel geändert, unter dem das Beleuchtungslicht 22 aus dem Beleuchtungsobjektiv 42 tritt. Das Verstellelement 34 ist in einer Ebene angeordnet, die zur Pupillenebene des Beleuchtungsobjektivs 42 konjugiert ist. Durch das Verstellelement 34 lässt sich somit die Position des aus dem Beleuchtungsobjektiv 42 austretenden Beleuchtungslichts 22 einstellen. Die beiden Verstellelemente 34 und 38 erlauben es also, Position und Winkel des Lichtblattes unabhängig voneinander zu justieren.

Die Beleuchtungsoptik 12 kann für die Lichtblatterzeugung weitere, in Figur 1 nicht explizit gezeigte Elemente enthalten, beispielsweise eine Feldblende und/eine Aperturblende. Die Feldblende hat hierbei die Funktion, das Lichtblatt in der Richtung, in der es ausgedehnt ist, zu begrenzen. Demgegenüber dient die Aperturblende der Begrenzung des Öffnungswinkels, mit dem das Lichtblatt fokussiert wird.

Die Transportoptik 14 enthält ein der nicht gezeigten Probe zugewandtes Objektiv 44, ein Tubuslinsensystem 46, ein Okularlinsensystem 48, ein Abtastelement 50, ein Okularlinsensystem 52, ein Tubuslinsensystem 54, ein Umlenkelement 26, ein Afokalsystem 58 sowie ein Zwischenabbildungsobjektiv 56 in dieser Reihenfolge vom Objekt her betrachtet. Das Objektiv 44 bildet dabei das einzige probenzugewandte Objektiv des Lichtblattmikroskops 10.

Die Transportoptik 14 ist als beidseitig telezentrisches optisches System ausgeführt. Das in der Transportoptik 14 enthaltene Afokalsystem 58 dient dazu, die für den gewünschten Volumenbildtransport erforderliche Vergrößerungsanpassung an das Brechungsindexverhältnis zwischen Probenraum und Zwischenbildraum 18 vorzunehmen.

Das Abtastelement 50, das beispielsweise als Galvanometerspiegel oder MEMS-Spiegel ausgeführt ist, ermöglicht es, die Probe lateral, d.h. quer zur optischen Achse des Objektivs 44 mit dem Lichtblatt abzutasten. Hierzu ist das Abtastelement 50 zwischen den beiden Okularlinsensystemen 48 und 52 an einer Stelle angeordnet, an der mit Hilfe der Okularlinsensysteme 48 und 52 ein reelles Bild der Pupille der Transportoptik 14 erzeugt wird.

Die Detektionsoptik 16 enthält ein dem Zwischenbildraum 18 zugewandtes Detektionsobjekt 60 sowie ein Tubuslinsensystem 62. Über das Detektionsobjektiv 60 und das Tubuslinsensystem 62 wird das durch die Transportoptik 14 in dem Zwischenbildraum erzeugte Zwischenbild des mit dem Lichtblatt beleuchteten Probenbereichs auf die Detektorfläche 28 des Detektors 30 abgebildet.

Das Lichtblattmikroskop 10 weist ferner eine Kontrolleinheit 64 auf, welche die Lichtquelle 20, den Detektor 30 und das Abtastelement 50 steuert. Insbesondere sorgt die Kontrolleinheit 64 dafür, dass die Lichtquelle 20, der Detektor 30 und das Abtastelement 50 aufeinander synchronisiert betrieben werden. So stellt die Kontrolleinheit 64 beispielsweise sicher, dass die Verkippung des Abtastelementes 50 und damit die laterale Abtastbewegung des Lichtblatts mit der Bildaufnahme des Detektors 30 synchronisiert wird. Auch die Lichtquelle 20 kann mit Hilfe der Kontrolleinheit 64 synchronisiert betrieben werden, etwa in der Weise, dass das Beleuchtungslicht während einer Rückstellbewegung des Abtastelementes 50 und/oder während einer Auslesezeit des Detektors 30 abgeschaltet wird. Diese synchronisierenden Steuervorgänge sind selbstverständlich nur beispielhaft zu verstehen.

Da in dem Lichtblattmikroskop 10 nach Figur 1 die Beleuchtungsoptik 12, die Transportoptik 14 und die Detektionsoptik 16 derart aufeinander ausgerichtet sind, dass ihre optische Achsen O₁, O₂ bzw. O₃ im Zwischenbildraum 18 zusammenlaufen, erfolgt die Einkopplung des von der Lichtquelle 20 erzeugten Beleuchtungslichts 22 in die Transportoptik 14 gleichsam durch eine geometrische Kombination im Bereich des Zwischenbildes, was einen Verzicht auf dichroitische Strahlteilerelemente im Bereich der Transportoptik 14 ermöglicht. Somit kann ein die Abbildungsleistung der Transportoptik 14 beeinträchtigender Pupillenversatz zuverlässig vermieden werden.

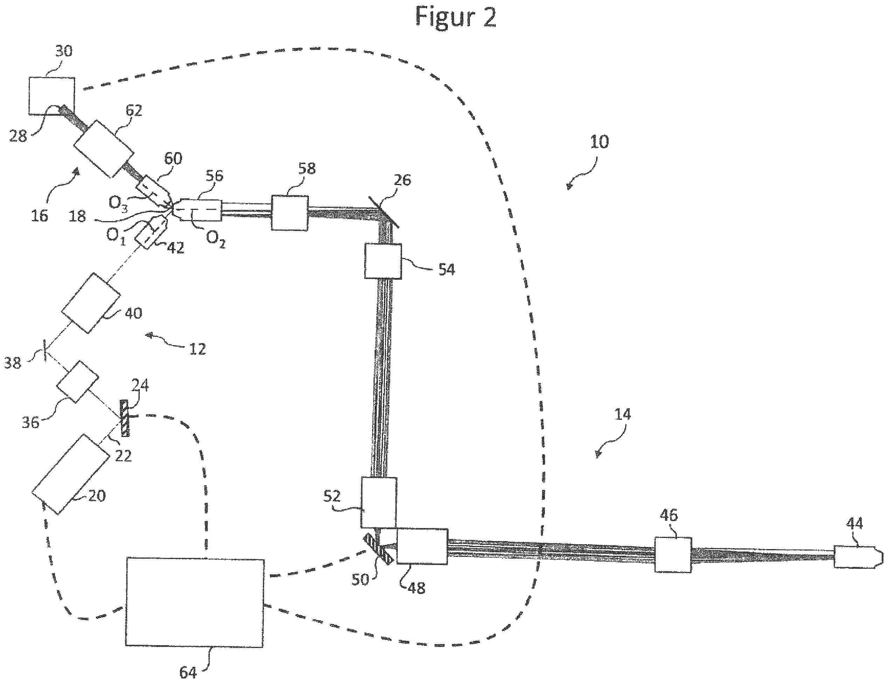

In Figur 2 ist eine Abwandlung des in Figur 1 gezeigten Lichtblattmikroskops 10 als zweites Ausführungsbeispiel gezeigt. Diese Abwandlung besteht allein darin, dass anstelle der Zylinderlinse 32, die in dem ersten Ausführungsbeispiel der Erzeugung des Lichtblattes dient, ein weiteres Abtastelement 24 in der Beleuchtungsoptik 12 vorgesehen ist. Das Abtastelement 24, das beispielsweise ein Galvanometerspiegel oder ein MEMS-Spiegel ist, ist in der Beleuchtungsoptik 12 an der Stelle angeordnet, an der sich in dem ersten Ausführungsbeispiel das Verstellelement 34 befindet. Das Abtastelement 24 bewirkt eine Abtastbewegung des Beleuchtungslichts, durch die das gewünschte Lichtblatt sequentiell aufgebaut wird. Dabei sorgt die Kontrolleinheit 64 wiederum dafür, dass der Betrieb des Abtastelementes 24 mit den anderen Systemkomponenten, insbesondere dem in der Transportoptik 14 enthaltenen Abtastelement 50 und dem Detektor 30 synchronisiert ist.

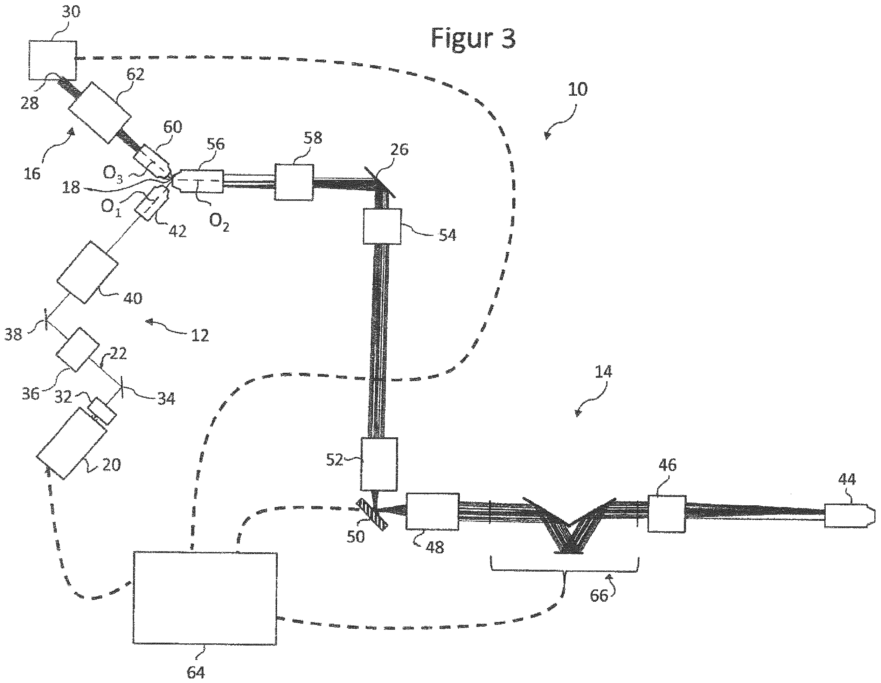

Figur 3 zeigt eine weitere Abwandlung des Lichtblattmikroskops 10 nach Figur 1 als drittes Ausführungsbeispiel. So enthält das dritte Ausführungsbeispiel in der Transportoptik 14 zwischen dem Objektiv 44 und dem Abtastelement 50 eine Bildrotationseinheit 66, die beispielsweise als Abbe-König-Rotator ausgeführt ist. Die Bildrotationseinheit 66 dient dazu, den Azimut der Verkippung des in die Probe abgebildeten Lichtblatts, die durch die gewählte Geometrie der optischen Anordnung innerhalb des Lichtblattmikroskops 10 festgelegt ist, nach Wunsch zu variieren. Auch die Bildrotationseinheit 66 lässt sich mittels der Kontrolleinheit 64 synchron mit den anderen Systemkomponenten steuern.

Es versteht sich von selbst, dass das in Figur 3 gezeigte Bildrotationselement 66 auch in dem zweiten Ausführungsbeispiel nach Figur 2 einsetzbar ist.

### Bezugszeichenliste

- 10: Lichtblattmikroskop
- 12: Beleuchtungsoptik
- 14: Transportoptik
- 16: Detektionsoptik
- 18: Zwischenbildraum
- 20: Lichtquelle
- 22: Beleuchtungslicht
- 24: Abtastelement
- 26: Umlenkelement
- 28: Detektionsfläche
- 30: Detektor
- 32: Zylinderlinse
- 34: Verstellelement
- 36: Okularlinsensystem
- 38: Verstellelement
- 40: Tubuslinsensystem
- 42: Beleuchtungsobjektiv
- 44: probenzugewandtes Objektiv
- 46: Tubuslinsensystem
- 48: Okularlinsensystem
- 50: Abtastelement
- 52: Okularlinsensystem
- 54: Tubuslinsensystem
- 56: Zwischenabbildungsobjektiv
- 58: Afokalsystem
- 60: Detektionsobjektiv
- 62: Tubuslinsensystem
- 64: Kontrolleinheit
- 66: Bildrotationseinheit
- O₁: optische Achse der Beleuchtungsoptik
- O₂: optische Achse der Transportoptik
- O₃: optische Achse der Detektionsoptik

## Patentansprüche

1. Lichtblattmikroskop (10), umfassend:
- eine Beleuchtungsoptik (12) zum Erzeugen eines Lichtblatts in einem Zwischenbildraum (18),
- eine beidseitig telezentrisch ausgebildete Transportoptik (14) zum Abbilden des in dem Zwischenbildraum (18) erzeugten Lichtblatts in eine Probe und zum Abbilden eines mit dem Lichtblatt beleuchteten Bereichs der Probe als Zwischenbild in den Zwischenbildraum (18), und
- eine Detektionsoptik (16) zum Abbilden des in dem Zwischenbildraum (18) erzeugten Zwischenbildes auf einen Detektor (30),
- wobei die optischen Achsen (O₁, O₂, O₃) der Beleuchtungsoptik (12), der Transportoptik (14) und der Detektionsoptik (16) einander in dem Zwischenbildraum (18) schneiden, und
- wobei die Transportoptik (14) ausgebildet ist, das Lichtblatt in der Probe schräg zur optischen Achse (O₂) der Transportoptik (14) zu stellen,
- **gekennzeichnet durch** ein innerhalb der Transportoptik (14) am Ort eines reellen Pupillenbildes angeordnetes Abtastelement (50), durch welches das Lichtblatt in der Probe quer zur optischen Achse (O₂) der Transportoptik (14) bewegbar ist, um eine laterale Abtastung der Probe mit dem Lichtblatt zur Volumenbildgebung zu ermöglichen.

2. Lichtblattmikroskop (10) nach Anspruch 1, **dadurch gekennzeichnet, dass** die Transportoptik (14) strahlteilerfrei ist.

3. Lichtblattmikroskop (10) nach einem der vorhergehenden Ansprüche, **dadurch gekennzeichnet, dass** die Transportoptik (14) ein erstes Objektiv (44) enthält, welches das einzige probenzugewandte Objektiv des Lichtblattmikroskops (10) bildet.

4. Lichtblattmikroskop (10) nach Anspruch 3, **dadurch gekennzeichnet, dass** die Transportoptik (14) ferner ein erstes Tubuslinsensystem (46) , ein erstes Okularlinsensystem (48), ein zweites Okularlinsensystem (52), ein zweites Tubuslinsensystem (54) und ein dem Zwischenbildraum (18) zugewandtes Zwischenabblidungsbjektiv (56) enthält, die in der dieser Reihenfolge von der Probe her angeordnet sind.

5. Lichtblattmikroskop (10) nach Anspruch 4, **dadurch gekennzeichnet, dass** das Abtastelement (50) zwischen dem ersten Okularlinsensystem (48) und dem zweiten Okularlinsensystem (52) angeordnet ist.

6. Lichtblattmikroskop (10) nach einem der vorhergehenden Ansprüche, **dadurch gekennzeichnet, dass** die Transportoptik (14) eine Bildrotationseinheit (66) enthält, durch welche die Verkippung des Lichtblatts in der Probe relativ zur optischen Achse (O₂) der Transportoptik (14) änderbar ist.

7. Lichtblattmikroskop (10) nach einem der vorhergehenden Ansprüche, **dadurch gekennzeichnet, dass** die Beleuchtungsoptik (12) ein Fernrohrsystem (36, 40) und ein dem Zwischenbildraum (18) zugewandtes Beleuchtungsobjektiv (42) enthält.

8. Lichtblattmikroskop (10) nach einem der vorhergehenden Ansprüche, **dadurch gekennzeichnet, dass** die Beleuchtungsoptik (12) ein anamorphotisches optisches System (32, 42) zum Erzeugen des Lichtblatts in dem Zwischenbildraum (18) enthält.

9. Lichtblattmikroskop (10) nach einem der Ansprüche 1 bis 7, **dadurch gekennzeichnet, dass** die Beleuchtungsoptik (12) ein weiteres Abtastelement (24) zum Erzeugen des Lichtblatts in dem Zwischenbildraum (18) enthält.

10. Lichtblattmikroskop (10) nach einem der vorhergehenden Ansprüche, **dadurch gekennzeichnet, dass** die Beleuchtungsoptik (12) eine Verstellvorrichtung (34, 38) zur Ausrichtung des Lichtblatts relativ zu einer Detektionsfläche (28) des Detektors (30) enthält.

11. Lichtblattmikroskop (10) nach Anspruch 10, **dadurch gekennzeichnet, dass** die Verstellvorrichtung ein erstes Verstellelement (38), das in einer zu einer Bildebene konjugierten Ebene angeordnet ist, und ein zweites Verstellelement (34) umfasst, das in einer zu einer Pupillenebene konjugierten Ebene angeordnet ist.

12. Lichtblattmikroskop (10) nach einem der vorhergehenden Ansprüche, **dadurch gekennzeichnet, dass** die Transportoptik als korrektionsoptisches System ausgebildet ist, das die Anpassung an Proben unterschiedlicher Brechungsindizes ermöglicht.

13. Verfahren zur lichtmikroskopischen Abbildung einer Probe, umfassend folgende Schritte:
- Erzeugen eines Lichtblatts in einem Zwischenbildraum (18) mittels einer Beleuchtungsoptik (12),
- Abbilden des in dem Zwischenbildraum (18) erzeugten Lichtblatts in die Probe und Abbilden eines mit dem Lichtblatt beleuchteten Bereichs der Probe als Zwischenbild in den Zwischenbildraum (18) mittels einer beidseitig telezentrisch ausgebildeten Transportoptik (14), und
- Abbilden des in dem Zwischenbildraum (18) erzeugten Zwischenbildes mittels einer Detektionsoptik (16) auf einen Detektor (30),
- wobei die optischen Achsen (O₁, O₂, O₃) der Beleuchtungsoptik (12), derTransportoptik (14) und der Detektionsoptik (16) einander in dem Zwischenbildraum (18) schneiden, und
- wobei die Transportoptik (14) ausgebildet ist, das Lichtblatt in der Probe schräg zur optischen Achse (O₂) der Transportoptik (14) zu stellen,
- **dadurch gekennzeichnet, dass** das Lichtblatt mittels eines innerhalb der Transportoptik (14) am Ort eines reellen Pupillenbildes angeordneten Abtastelementes (50) in der Probe quer zur optischen Achse (O₂) der Transportoptik (14) bewegt wird, um eine laterale Abtastung der Probe mit dem Lichtblatt zur Volumenbildgebung zu ermöglichen.

## Claims

1. A light sheet microscope (10), comprising:
- an illumination optical system (12) for generating a light sheet in an intermediate image space (18),
- a transport optical system (14), which is telecentric on both sides, for imaging the light sheet generated in the intermediate image space (18) into a sample and for imaging a region of the sample illuminated by the light sheet as an intermediate image into the intermediate image space (18), and
- a detection optical system (16) for imaging the intermediate image generated in the intermediate image space (18) onto a detector (30),
- the optical axes (O₁, O₂, O₃) of the illumination optical system (12), the transport optical system (14) and the detection optical system (16) intersecting one another in the intermediate image space (18), and
- the transport optical system (14) being designed to position the light sheet in the sample obliquely to the optical axis (O₂) of the transport optical system (14),
- **characterized by** a scanning element (50) which is arranged in the transport optical system (14) at the location of an actual pupil image, and through which the light sheet can be moved in the sample transversely to the optical axis (O₂) of the transport optical system (14) to enable a lateral scanning of the sample with the light sheet for volume imaging.

2. The light sheet microscope (10) according to claim 1, **characterized in that** the transport optical system (14) is free of beam splitters.

3. The light sheet microscope (10) according to one of the preceding claims, **characterized in that** the transport optical system (14) includes a first objective (44), which forms the only sample-facing objective of the light sheet microscope (10).

4. The light sheet microscope (10) according to claim 3, **characterized in that** the transport optical system (14) further includes a first tube lens system (46), a first ocular lens system (48), a second ocular lens system (52), a second tube lens system (54), and an intermediate imaging objective (56) that faces the intermediate image space (18), which are arranged in this order starting from the sample.

5. The light sheet microscope (10) according to claim 4, **characterized in that** the scanning element (50) is arranged between the first ocular lens system (48) and the second ocular lens system (52).

6. The light sheet microscope (10) according to one of the preceding claims, **characterized in that** the transport optical system (14) includes an image rotation unit (66), by means of which the tilting of the light sheet in the sample relative to the optical axis (O₂) of the transport optical system (14) can be changed.

7. The light sheet microscope (10) according to one of the preceding claims, **characterized in that** the illumination optical system (12) includes a telescope system (36, 40) and an illumination objective (42) facing the intermediate image space (18).

8. The light sheet microscope (10) according to one of the preceding claims, **characterized in that** the illumination optical system (12) includes an anamorphic optical system (32, 42) for generating the light sheet in the intermediate image space (18).

9. The light sheet microscope (10) according to one of the claims 1 to 7, **characterized in that** the illumination optical system (12) includes a further scanning element (24) for generating the light sheet in the intermediate image space (18).

10. The light sheet microscope (10) according to one of the preceding claims, **characterized in that** the illumination optical system (12) includes an adjustment device (34, 38) for orienting the light sheet relative to a detection surface (28) of the detector (30).

11. The light sheet microscope (10) according to claim 10, **characterized in that** the adjustment device comprises a first adjustment element (38), which is arranged in a plane that is conjugate with an image plane, and a second adjustment element (34), which is arranged in a plane that is conjugate with a pupil plane.

12. The light sheet microscope (10) according to one of the preceding claims, **characterized in that** the transport optical system is designed as a correction optical system that allows adjustment to samples of different refractive indices.

13. A method for light-microscopy imaging of a sample, comprising the following steps:
- generating a light sheet in an intermediate image space (18) by means of an illumination optical system (12),
- imaging the light sheet generated in the intermediate image space (18) into the sample and imaging a region of the sample illuminated by the light sheet as an intermediate image into the intermediate image space (18) by means of a transport optical system (14) that is telecentric on both sides, and
- imaging the intermediate image generated in the intermediate image space (18) onto a detector (30) by means of a detection optical system (16),
- the optical axes (O₁, O₂, O₃) of the illumination optical system (12), the transport optical system (14) and the detection optical system (16) intersecting one another in the intermediate image space (18), and
- the transport optical system (14) being designed to position the light sheet in the sample obliquely to the optical axis (O₂) of the transport optical system (14),
- **characterized in that** the light sheet is moved in the sample transversely to the optical axis (O₂) of the transport optical system (14) by means of a scanning element (50) arranged in the transport optical system (14) at the location of an actual pupil image, in order to enable a lateral scanning of the sample with the light sheet for volume imaging.

## Revendications

1. Microscope à feuille de lumière (10), comprenant :
- une optique d'éclairage (12) servant à générer une feuille de lumière dans un espace d'image intermédiaire (18),
- une optique de transport (14) réalisée de manière télécentrique bilatérale, servant à représenter la feuille de lumière générée dans l'espace d'image intermédiaire (18) sur un échantillon et à représenter une zone de l'échantillon éclairée par la feuille de lumière comme une image intermédiaire dans l'espace d'image intermédiaire (18), et
- une optique de détection (16) servant à représenter sur un détecteur (30) l'image intermédiaire générée dans l'espace d'image intermédiaire (18),
- les axes optiques (O₁, O₂, O₃) de l'optique d'éclairage (12), de l'optique de transport (14) et de l'optique de détection (16) s'intersectant dans l'espace d'image intermédiaire (18), et
- l'optique de transport (14) étant réalisée pour incliner la feuille de lumière dans l'échantillon par rapport à l'axe optique (O₂) de l'optique de transport (14),
- **caractérisé par** un élément de balayage (50) disposé à l'intérieur de l'optique de transport (14) à l'endroit d'une image de pupille réelle, qui permet de déplacer la feuille de lumière dans l'échantillon transversalement à l'axe optique (O₂) de l'optique de transport (14) afin de permettre un balayage latéral de l'échantillon par la feuille de lumière pour l'imagerie en volume.

2. Microscope à feuille de lumière (10) selon la revendication 1, **caractérisé en ce que** l'optique de transport (14) est exempte de séparateur de faisceaux.

3. Microscope à feuille de lumière (10) selon l'une quelconque des revendications précédentes, **caractérisé en ce que** l'optique de transport (14) comporte un premier objectif (44) qui est le seul objectif tourné vers l'échantillon du microscope à feuille de lumière (10).

4. Microscope à feuille de lumière (10) selon la revendication 3, **caractérisé en ce que** l'optique de transport (14) comporte en outre un premier système de lentilles tubulaires (46), un premier système de lentilles oculaires (48), un deuxième système de lentilles oculaires (52), un deuxième système de lentilles tubulaires (54) et un objectif de représentation intermédiaire (56) tourné vers l'espace d'image intermédiaire (18), qui sont disposés dans cet ordre en partant de l'échantillon.

5. Microscope à feuille de lumière (10) selon la revendication 4, **caractérisé en ce que** l'élément de balayage (50) est disposé entre le premier système de lentilles oculaires (48) et le deuxième système de lentilles oculaires (52).

6. Microscope à feuille de lumière (10) selon l'une quelconque des revendications précédentes, **caractérisé en ce que** l'optique de transport (14) comporte une unité de rotation d'image (66) qui permet de modifier le basculement de la feuille de lumière dans l'échantillon par rapport à l'axe optique (O₂) de l'optique de transport (14) .

7. Microscope à feuille de lumière (10) selon l'une quelconque des revendications précédentes, **caractérisé en ce que** l'optique d'éclairage (12) comporte un système de télescope (36, 40) et un objectif d'éclairage (42) tourné vers l'espace d'image intermédiaire (18).

8. Microscope à feuille de lumière (10) selon l'une quelconque des revendications précédentes, **caractérisé en ce que** l'optique d'éclairage (12) comporte un système optique anamorphoseur (32, 42) servant à générer la feuille de lumière dans l'espace d'image intermédiaire (18) .

9. Microscope à feuille de lumière (10) selon l'une quelconque des revendications 1 à 7, **caractérisé en ce que** l'optique d'éclairage (12) comporte un autre élément de balayage (24) servant à générer la feuille de lumière dans l'espace d'image intermédiaire (18).

10. Microscope à feuille de lumière (10) selon l'une quelconque des revendications précédentes, **caractérisé en ce que** l'optique d'éclairage (12) comporte un dispositif de réglage (34, 38) servant à aligner la feuille de lumière par rapport à une surface de détection (28) du détecteur (30).

11. Microscope à feuille de lumière (10) selon la revendication 10, **caractérisé en ce que** le dispositif de réglage comprend un premier élément de réglage (38) qui est disposé dans un plan conjugué d'un plan d'image, et un deuxième élément de réglage (34) qui est disposé dans un plan conjugué d'un plan de pupille.

12. Microscope à feuille de lumière (10) selon l'une quelconque des revendications précédentes, **caractérisé en ce que** l'optique de transport est réalisée comme un système optique de correction qui permet de s'adapter à des échantillons ayant différents indices de réfraction.

13. Procédé d'imagerie par microscopie optique d'un échantillon, comprenant les étapes suivantes consistant à :
- générer une feuille de lumière dans un espace d'image intermédiaire (18) au moyen d'une optique d'éclairage (12),
- représenter la feuille de lumière générée dans l'espace d'image intermédiaire (18) sur l'échantillon, et représenter une zone de l'échantillon éclairée par la feuille de lumière comme une image intermédiaire dans l'espace d'image intermédiaire (18) au moyen d'une optique de transport (14) réalisée de manière télécentrique bilatérale, et
- représenter sur un détecteur (30) l'image intermédiaire générée dans l'espace d'image intermédiaire (18) au moyen d'une optique de détection (16),
- dans lequel les axes optiques (O₁, O₂, O₃) de l'optique d'éclairage (12), de l'optique de transport (14) et de l'optique de détection (16) s'intersectent dans l'espace d'image intermédiaire (18), et
- l'optique de transport (14) étant réalisée pour incliner la feuille de lumière dans l'échantillon par rapport à l'axe optique (O₂) de l'optique de transport (14),
- **caractérisé en ce que** la feuille de lumière est déplacée au moyen d'un élément de balayage (50) disposé à l'intérieur de l'optique de transport (14) à l'endroit d'une image de pupille réelle dans l'échantillon transversalement à l'axe optique (O₂) de l'optique de transport (14) afin de permettre un balayage latéral de l'échantillon par la feuille de lumière pour l'imagerie en volume.
